# EUROPÄISCHE PATENTSCHRIFT

(11) **EP 3 741 207 B1**
(45) Veröffentlichungstag und Bekanntmachung des Hinweises auf die Patenterteilung: **16.11.2022**
(21) Anmeldenummer: 20185236.5
(22) Anmeldetag: 19.06.2018
(51) Int. Cl.: A01K 5/00, A01K 5/02

(54) **ROBOTER**
ROBOT
ROBOT

(30) Priorität: 21.07.2017 DE 202017104377 U
(43) Veröffentlichungstag der Anmeldung: 25.11.2020
(62) Teilanmeldung aus: 18178410.9
(73) Patentinhaber: Trioliet B.V., 7575 BE Oldenzaal (NL)
(72) Erfinder: Liet, Cornelius Hendricus, 7581 PJ Losser (NL)
(74) Vertreter: Grünecker Patent- und Rechtsanwälte PartG mbB

(56) Entgegenhaltungen:
- WO-A1-2014/120000
- DE-A1- 10 345 322
- DE-U1-202013 105 907

## Beschreibung

Die Erfindung betrifft einen Roboter gemäß Oberbegriff des Patentanspruchs 1.

Ein in einer Anlage zwischen den Lagern und den Ställen selbstfahrender Roboter muss als Fütter-Roboter geladenes Futter gut und schnell vermischen und gegebenenfalls verschneiden, falls es nicht in den als Verteilroboter eingesetzten Roboter schon vorgemischt geladen wird. Speziell zum Mischen wird erhebliche elektrische Leistung benötigt. Bei einem Roboter mit ca. 3 m³ Fassungsvermögen werden bei einer Futterdichte von etwa 350 kg/m³ etwa 11 Kw benötigt. Auch zum Selbstfahren, entweder über eine Hängeschiene oder auf einem Fahrgestell zu den und von den Ausdosierstellen und das Ausdosieren z. B. über einen Seitenschieber, Dosierwalzen und/oder mittels eines Querförderbandes wird ebenfalls erhebliche elektrische Leistung benötigt. Pro Tag führt der Roboter beispielsweise 35 Zyklen aus. Aufgrund des hohen Strombedarfs wird im Stand der Technik bislang in der Futterküche eine einzige in der Position vorbestimmte Andockvorrichtung an das Stromnetz installiert, und/oder werden sämtliche Fahrstrecken auch in den Ställen mit Stromschienen ausgestattet. Wenn jedoch die Anlage mehrere Gebäude umfasst, muss die Stromschienenstrecke auch zwischen den Gebäuden installiert werden, was den Verkehr in der Anlage behindert und extreme Kosten für die Tragkonstruktionen bedingt. Außerdem ist die Ansicht vieler Stromschienenstrecken und deren Aufhängungen außerhalb von Gebäuden störend.

In einer aus WO 2014/120000 A1 bekannten Anlage kann ein von einem Traktor zum Stall geschleppter Mischwagen ein lenkbares und ein antreibbares Rad aufweisen und nur im Stall ohne Leitschiene als selbstfahrender Roboter Futter ausdosieren. Die Batterie kann eine Hochvolt-Batterie sein.

Ein aus DE 103 45 322 A1 bekannter Futtermischwagen kann als Roboter in Stallgebäuden und allgemein in der Nähe von Tieren betrieben werden, um ein emissionsvermindertes Fahren und Arbeiten zu ermöglichen. Als Energiequelle unter anderem für über Frequenzumrichter gespeiste Wechselstrom-Motoren weist er eine Batterie auf. Bei Nutzen eines stationären DreiPhasen-Wechselstromnetzes zur Stromversorgung sind zum Beispiel im Mischwagen Gleichrichter- und Wechselrichter-Einheiten vorgesehen.

Bei einem aus DE 20 2013 105 907 U1 bekannten Fütterroboter mit selbstfahrendem Fahrwerk werden die Elektromotoren im Stall über eine Stromversorgungs- und Lenksystem-Schiene mit Strom versorgt. Außerdem sind aufladbare bordeigene Kondensatoren über Frequenzumrichter mit den Elektromotoren verbunden. Die Stromversorgungs- und Lenksystem-Schiene folgt dem Bewegungsweg des Roboters in den Ställen. Zwischen zwei Ställen fährt der Roboter mit Strom aus den Kondensatoren.

Der Erfindung liegt die Aufgabe zugrunde, einen Fütter-Roboter oder Verteil-Roboter zu schaffen, der einen energieeffizienten Betrieb ermöglicht.

Die gestellte Aufgabe wird mit den Merkmalen des Patentanspruchs 1 gelöst.

Anstelle 12 V- oder 24 V-Batterien mit Standard-Niedrigspannung weist der Fütter-Roboter oder Verteil-Roboter wenigstens eine Hochvolt-Batterie auf, die zumindest abgabeseitig an den Gleichstrom-Zwischenkreis des jeweiligen Frequenzumrichters angeschlossen ist. Die Hochvolt-Batterie und der zur Drehzahlregelung des Elektroantriebs vorgesehene Frequenzumrichter gestatten die Verwendung effizienter Elektromotoren, die relativ kostengünstig sind und hohe Leistung haben, wobei der Anschluss der Batterie an den Gleichstrom-Zwischenkreis den signifikanten Vorteil ergibt, teure und schwere Konverter weglassen zu können, und im Batteriebetrieb mit hoher Abgabe-Gleichspannung der Batterie direkt über den Gleichstrom-Zwischenkreis des Frequenzumrichters den Elektroantrieb zu versorgen. Sobald der Fütter-Roboter z.B. seine Mischarbeit abgeschlossen hat oder der Verteil-Roboter beladen ist, fährt er selbstständig entlang der Fahrstrecken zu und in den Stall, um auszudosieren, wobei der Fahrbetrieb und das Ausdosieren über Strom aus der Batterie erfolgen können, die schon in der Futterküche voll aufgeladen wurde. Ein Fütter-Roboter kann zwei Mischorgane im Behälter haben, mischt das Futter selbsttätig und schneidet dieses ggf. und dosiert drehzahlgeregelt aus. Ein Verteilroboter, wird im Behälter mit Futter oder sogar bereits gemischtem Futter beladen und dosiert dieses z.B. ohne Drehzahlregelung aus. Es weist der Fütter-Roboter Elektroantriebe für Mischorgane, für Antriebs- und/oder Lenkräder und für wenigstens eine Ausdosiervorrichtung auf. Die Elektroantriebe können nur Elektromotoren umfassen, aber auch Getriebe wie Planetengetriebe und dergleichen, beispielsweise, um mit effizienter hoher Ausgangsdrehzahl des Elektromotors geringe Antriebsdrehzahlen mit hohen Drehmomenten erzeugen zu können.

Die jeweilige Batterie ist eine Hochvolt-Batterie mit hoher Abgabe-Gleichspannung für den Gleichstrom-Zwischenkreis des Frequenzumrichters. Besonders geeignet sind Nickel/Metallhydride-Batterien oder Lithiumbatterien oder Nickel-Cadmium-Batterien (LiNiMnCo oder LiMnCo zum Beispiel), deren Vorteile hohe Ladekapazität und schnelle Ladevorgänge sind. Es kann Gleichstrom alternativ aus anderen, für diesen Zweck geeigneten Hochvolt-Batterien eingespeist werden.

Die Batterie-Ladevorrichtung kann sich im Roboter befinden, und/oder es ist eine oder sind mehrere Batterie-Ladevorrichtungen stationär platziert und an eine Stromschienenstrecke angeschlossen.

Die Übertragung des Betriebs-, Arbeits- und/oder Ladestroms von der Stromschienenstrecke zum Roboter kann galvanisch, beispielsweise über als Schleifkontakte ausgebildete Stromabnehmer, oder auch berührungslos erfolgen.

Um einen leistungsfähigen Elektroantrieb verwenden und auch zusätzliche teure Ausstattungen, wie Konverter, einsparen zu können, ist es zweckmäßig, wenn Drehstrom mit mindestens etwa 230 VAC, vorzugsweise etwa 400 VAC, für den Frequenzumrichter des Elektroantriebes und ggf. für die Batterie-Ladevorrichtung bereitgestellt wird, wobei der Elektroantrieb zweckmäßig einen in Stern- oder Dreiecksschaltung betreibbaren Synchron- oder Asynchronmotor aufweisen kann. Steht im Netz nur 230 V-Einphasen-Strom zur Verfügung, wird dieser für die Stromschienenstrecke auf Drehstrom umgerichtet.

Um teure Konverter einzusparen, ist es besonders wichtig, dass die Hochvolt-Batterie abgabeseitig an einen Gleichstrom-Zwischenkreis zumindest eines, vorzugsweise aller, einen an eine Stromschienenstrecke anschließbaren Wechselstrom-Primärkreis, den Gleichstrom-Zwischenkreis, und einen an den Elektromotor anschließbaren Wechselstrom-Sekundärkreis aufweisenden Frequenzumrichter anschließbar ist.

Hierbei ist es zweckmäßig, wenn die Abgabe-Gleichspannung der Hochvolt-Batterie um einen Faktor >1, vorzugsweise theoretisch um 1,41 (Wurzel aus 2) höher ist als die den Wechselstrom-Primärkreis des Frequenzumrichters beaufschlagende Wechselspannung. Dieser Erhöhungsfaktor lässt mit der Hochvolt-Batterie eine erhöhte Abgabe-Gleichspannung abgeben, mit der effizient im Gleichstrom-Zwischenkreis des jeweiligen Frequenzumrichters die Motorsteuerung erfolgt.

In Europa steht häufig in den Primärkreis des Frequenzumrichters einspeisbarer Drehstrom mit 400 V, 50, Hz in drei Phasen zur Verfügung. Im Gleichstrom-Zwischenkreis des FrequenzUmrichters beträgt dann die Gleichspannung etwa 564V (Faktor etwa 1, 41). Mit z. B. sechs oder einem mehrfachen von sechs 96-Volt-Batterien sind somit etwa 576 Volt, bei vollen Batterien sogar bis etwa 680 Volt, zu nutzen. Der Elektromotor wird in Sternschaltung betrieben. In USA und Kanada steht häufig Drehstrom mit 230 Volt, 60 Hz, in drei Phasen zur Verfügung, zum Einspeisen in den Primärkreis. Im Zwischenkreis liegt Gleichstrom mit etwa 324 Volt an. Mit drei oder einem Mehrfachen von drei 108-Volt-Batterien sind mindestens etwa 324 Volt nutzbar. Der Elektromotor wird in Dreieckschaltung betrieben. Es lassen sich somit in beiden Marktbereichen in den Robotern gleiche Elektromotoren einsetzen.

Die erwähnten Spannungswerte sind nicht beschränkende theoretische Beispiele. Die in den Zwischenkreis eingespeiste Gleichspannung kann in der Praxis variieren, z.B. durchaus um etwa 10% höher sein.

Um die Hochvolt-Batterie ohne separate Ladevorrichtung zu laden, ist es zweckmäßig, die Hochvolt-Batterie über eine separate Lade-Leitung an den Gleichstrom-Zwischenkreis wenigstens eines Frequenzumrichters anzuschließen, überwacht z.B. durch einen Schalter oder ein Relais. Hierzu eignet sich z.B. der Frequenzumrichter eines Elektroantriebs, der nicht ständig in Betrieb ist.

Anhand der Zeichnungen werden Ausführungsformen des Erfindungsgegenstandes erläutert. Es zeigen:
- Fig. 1: eine Schemadraufsicht auf eine Anlage, geeignet zur Viehfütterung unter Verwendung eines selbstfahrenden Roboters,
- Fig. 2: eine Ausführungsform einer Futterküche in Perspektivdarstellung,
- Fig. 3: eine andere Ausführungsform einer Futterküche in Perspektivdarstellung,
- Fig. 4: eine Schnittdarstellung einer Ausführungsform eines als Fütter-Roboter, ausgebildeten Roboters,
- Fig. 5: eine andere Ausführungsform eines Fütter-Roboters in einem Längsschnitt,
- Fig. 6: ein Schaltbild einer Ausführungsform eines an eine Stromschienenstrecke angeschlossenen Roboters und
- Fig. 7: ein weiteres Schaltbild, ähnlich dem von Fig.6

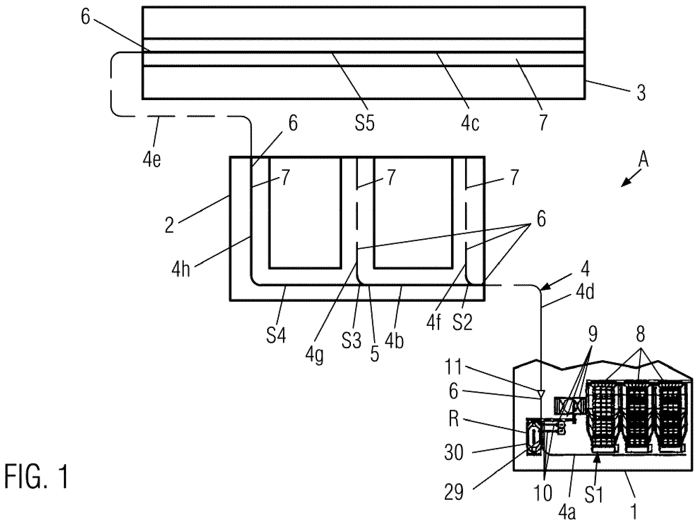

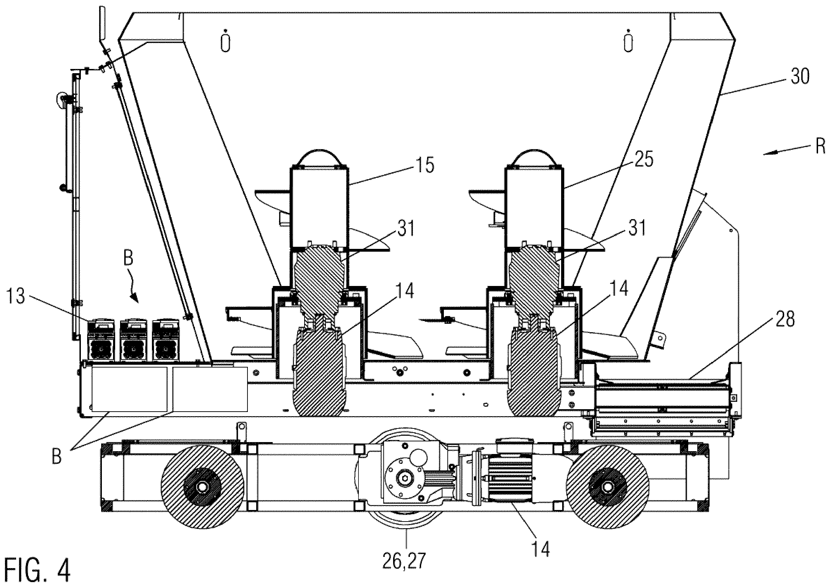

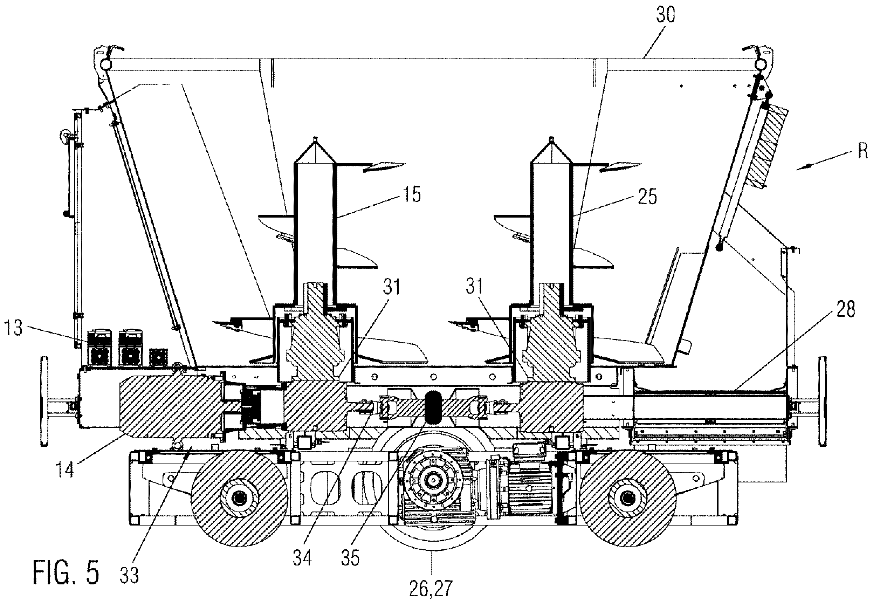

Die Fig. 1, 2 und 3 zeigen schematisch eine Anlage A zur Viehfütterung unter Verwendung eines Roboters R, der in den Fig. 4 und 5 in zwei möglichen, nicht beschränkenden Ausführungsformen eines Fütter-Roboters jeweils im Längsschnitt gezeigt ist.

Die Anlage A ist elektrisch betreibbar und energetisch hocheffizient, weil der Roboter R zumindest in einer Futterküche 1 mehrere Stellen anfahren kann, an denen er Drehstrom zur Verfügung hat, z.B. um Arbeiten mit hohem Strombedarf wie beispielsweise das Mischen und Schneiden von Futter mit dem Drehstrom auszuführen, und dabei stets auch wenigstens eine bordeigene Batterie B beiladen oder aufladen oder vollladen kann, wobei die Batterie B zweckmäßig eine leistungsstarke Hochvolt-Batterie wie eine Nickel/Metallhydride-Batterie oder eine Lithium-Batterie oder eine Nickel/Cadmium-Batterie oder eine sogenannte Traktionsbatterie mit gestapelten Folien ist. Der Drehstrom, die Hochvolt-Batterie B und die an mehreren Stellen verfügbare Stromversorgung ermöglichen in Kombination mit leistungsstarken, drehzahlregelbaren Elektromotoren in Elektroantrieben 14 der Komponenten des Roboters R störungsfreien Dauerbetrieb unter optimalen Bedingungen, was zur Energieeffizienz der Anlage A beiträgt.

In Fig. 1 ist als nicht beschränkendes Beispiel einer solchen Anlage A eine Futterküche 1 gezeigt, der in der dargestellten Ausführungsform zwei Ställe 2, 3 in Abständen von der Futterküche 1 zugeordnet sind. Der Stall 2 beherbergt beispielsweise hochleistungsfähiges Milchvieh, während der Stall 3 andere Viehsorten beherbergt. Das Vieh im Stall 2 benötigt beispielsweise mehr oder qualitativ besseres Futter als das Vieh im Stall 3. Beide Ställe 2, 3 werden vom Roboter R zyklisch angefahren, um das Vieh jeweils bedarfsgerecht zu versorgen, wobei das Futter in der Futterküche 1 zusammengestellt und gemischt wird. Die Futterküche 1 steht mit den Ställen 2, 3 über eine Fahrstrecke 4 in Verbindung, beispielsweise mit Leitschienen, Hängeschienen oder im Boden verlegten Schleifen. Der Roboter R ist entweder ein Fütter-Roboter gemäß Fig. 4 - 7 oder ein mit Futter oder sogar bereits gemischtem Futter beladbarer Verteil-Roboter (nicht gezeigt).

Es können auch mehrere Futterküchen 1 oder mehr als in Fig. 1 - 3 gezeigte Lager 8, 9 in bzw. bei der Futterküche 1 vorgesehen sein, als gezeigt, und mehr oder weniger als zwei Ställe 2, 3. In der gezeigten Ausführungsform sind in der Futterküche 1 drei Lager 8 nebeneinander für unterschiedliche Futtersorten vorgesehen, sowie ein aus Bunkern gebildetes Lager 9 für beispielsweise Zusatzstoffe.

Die Fahrstrecke 4 erstreckt sich an den Lagern 9, 8 in der Futterküche 1 vorbei, hier abgewinkelt. Zum Beladen des Roboters R können nicht gezeigte Beladeeinrichtungen verwendet werden. Das Lager 8 kann z.B. drei Zusatzbunker haben, einen z.B. für eine große Menge Biertreber/Zuckerrübengeschnitzel und zwei Mineraliendosierer 9 für Mehle oder Salze, jeweils mit Auslaufschnecke 10.

In der Futterküche 1 ist ein Abschnitt 4a der Fahrstrecke vorgesehen, dem entlang sich eine Stromschienenstrecke S1 mit wenigstens einer Andockvorrichtung 6 erstreckt, über welche der elektrisch betriebene Roboter R, wird, an die Stromschienenstrecke S1 andocken kann und dann an der Stromschienenstrecke S1 entlang fährt, oder von der Stromschienenstrecke S1 abdockt, und dann elektrisch über die Batterie B in einem Abschnitt 4d zum Stall 2 fährt. In der Futterküche 1 steht oder fährt der Roboter R gerade zu dem Lager 9, um von dort über eine Zuführvorrichtung 10 (Ausfuhrschnecke) beladen zu werden. Vom Roboter R ist ein Behälter 30 erkennbar, und wenigstens ein Stromabnehmer 29 zur elektrischen Verbindung mit der Stromschienenstrecke S1. Die Stromübertragung zum Roboter R kann galvanisch, z. B. mit einem Schleifkontakt, und zwei Stromabnehmern 29 erfolgen, oder alternativ berührungslos über Induktion. Ferner ist in Fig. 1 bei der Andockvorrichtung 6 ein Einführtrichter 11 angedeutet, über welchen Stromabnehmer 29 des Roboters R zuverlässig in die Andockvorrichtung 6 geführt werden. Alternativ könnte hier eine Zwangslenkeinrichtung vorgesehen sein, oder könnten, der oder die Stromabnehmer 29 federnd besserbar sein um die exakte Kopplung zwischen dem Roboter R und der Stromschienenstrecke S1 sicherzustellen.

Im Stall 2 sind als nicht beschränkendes Beispiel drei zueinander im Wesentlichen parallele Futtergassen 7 angedeutet, und im Stall 3 eine längs durchgehende Futtergasse 7. Zu fütterndes Vieh kann an beiden Seiten der jeweiligen Futtergasse 7 stehen, oder an einer Seite.

Als Option sind in Fig. 1 zusätzlich zu der Stromschienenstrecke S1 in der Futterküche 1 im Stall 2 weitere Stromschienenstrecken S2, S3 und S4 verbaut, zweckmäßig, wie in der Futterküche 1, auf nicht gezeigten Abstützungen oder Abhängungen und im Wesentlichen bodenparallel und geringfügig oberhalb des Behälters 30 des Roboters R. Die Stromschienenstrecken S2, S3 und S4 sind über Weichen 5 miteinander verknüpft. Die Stromschienenstrecke S2 erstreckt sich beispielsweise ausgehend von einer Andockvorrichtung 6 in einem Bogen über annähernd 90° und entlang eines bis zum Ende der Futtergasse 7 führenden Abschnitts 4f der Fahrstrecke 4, und zwar bis zu einer weiteren Andockvorrichtung 6 im Abstand von Ende der Futtergasse 7. Ferner erstreckt sich entlang eines Abschnitts 4b der Fahrstrecke senkrecht zu den Futtergassen 7 im Stall 2 eine weitere Stromschienenstrecke S4, von der über eine Weiche 5 eine Stromschienenstrecke S3 in die mittlere Futtergasse 7 abzweigt, und die sich bis über einen zum hinteren Ausgang des Stalls 2 führenden Abschnitt 4h der Fahrstrecke 4 und entlang der Stromschienenstrecke S4 erstreckt. Im Bereich des hinteren Ausgangs aus dem Stall 2 zu einem Abschnitt 4 der Fahrstrecke 4e ist eine weitere Andockvorrichtung 6 installiert. Entlang der Abschnitte 4d und 4e der Fahrstrecke 4 sind keine Stromschienenstrecken verbaut, beispielsweise, weil dies freies Gelände der Anlage A ist. Schließlich ist optional im Stall 3 entlang der Futtergasse 7 über deren Gesamtlänge eine weitere Stromschienenstrecke S5 vorgesehen, die eine weitere Andockvorrichtung 6 aufweist.

Wie erwähnt, sind die weiteren Stromschienenstrecken S2, S3, S4 und S5 Optionen und nicht unbedingt erforderlich. Alternativ könnten bei weiteren externen Lagern oder Einrichtungen der Anlage (nicht gezeigt), wie z. B. Silos oder dergleichen, weitere Stromschienenstrecken jeweils mit mindestens einer Andockvorrichtung verbaut sein, d. h. nicht im freien Gelände, sondern bei oder in gegebenen Aufbauten.

Der Fahrbetrieb des Roboters R erfolgt in den Abschnitten beispielsweise 4d, 4e und über einen Teil der Abschnitte 4f und 4g über die Batterie B, kann hingegen bei der gezeigten Ausführungsform entlang der Stromschienenstrecken S2, S3, S4 und S5 aus dem Netz gespeist werden. Bei der Stromeinspeisung aus dem Netz kann die Batterie B ständig beigeladen oder vollgeladen werden. Es ist selbstverständlich möglich, den Roboter R mit mehreren Batterien B auszustatten. Ferner kann die Anlage A mehr als einen Roboter R benutzen, die entweder hintereinander fahren, oder sich überkreuzen können.

Es ist ferner denkbar, den Roboter R nicht wie in der gezeigten Ausführungsform vom Ende der Futtergasse 7 im Stall 3 zurückfahren zu lassen, sondern es könnte dann ein weiterer Abschnitt der Fahrstrecke 4 vorgesehen sein, sodass der Roboter aus dem Stall 3 direkt zur Futterküche 1 zurückkehrt.

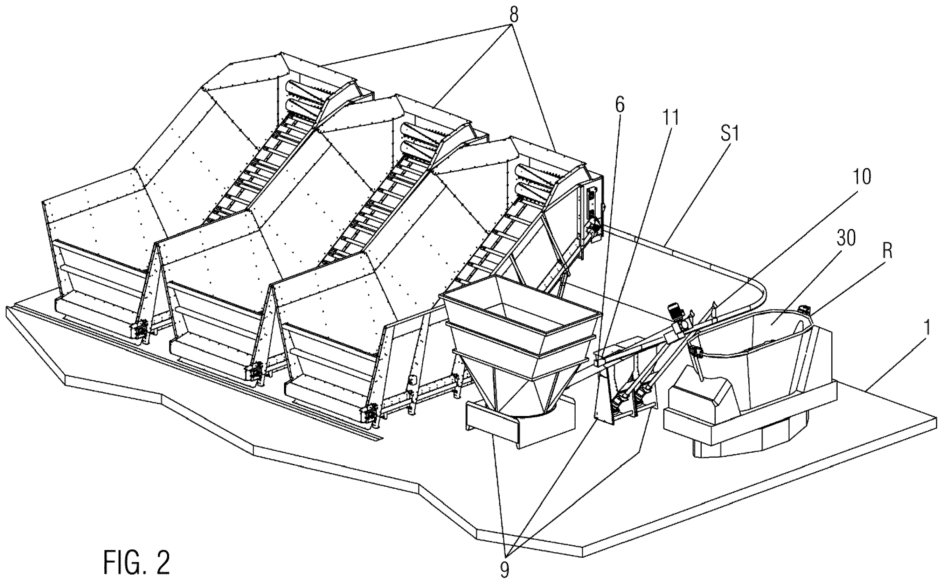

Fig. 2 verdeutlicht in einer Perspektivansicht die Futterküche 1 von Fig. 1 mit den drei Lagern 8, die zueinander parallel angeordnet sind, und dem als Bunker 9 ausgebildeten Lager 9 mit seinen Zuführvorrichtungen 10. Ferner ist die Stromschienenstrecke S1 gezeigt, die sich hier um 90° abknickend entlang dem Lager 9 und entlang der Lager 8 erstreckt. Abhängungen oder Bodenstützen der Stromschienenstrecke S1 sind in Fig. 2 nicht angedeutet.

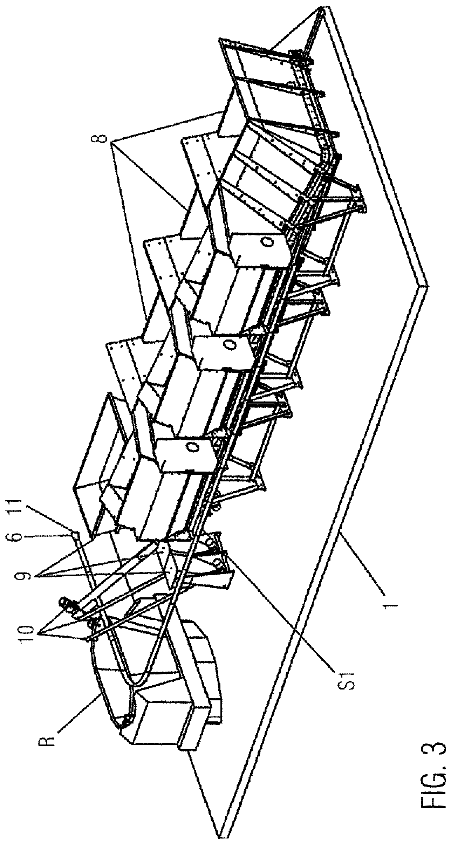

Fig. 3 zeigt eine andere Ausführungsform einer Futterküche 1, hier mit wiederum drei parallelen Lagern 8 und dem Lager 9 sowie der Stromschienenstrecke S1, die im Wesentlichen die ganze Futterküche 1 dort abdeckt, wo der Roboter R zu fahren hat, um beladen zu werden oder die Ladung zu mischen und zu schneiden. Mischen und Schneiden sind Arbeiten des Roboters R, die den höchsten Strombedarf haben und zweckmäßig deshalb aus dem Netz gespeist werden, wobei die Batterie B beigeladen oder jeweils vollgeladen wird.

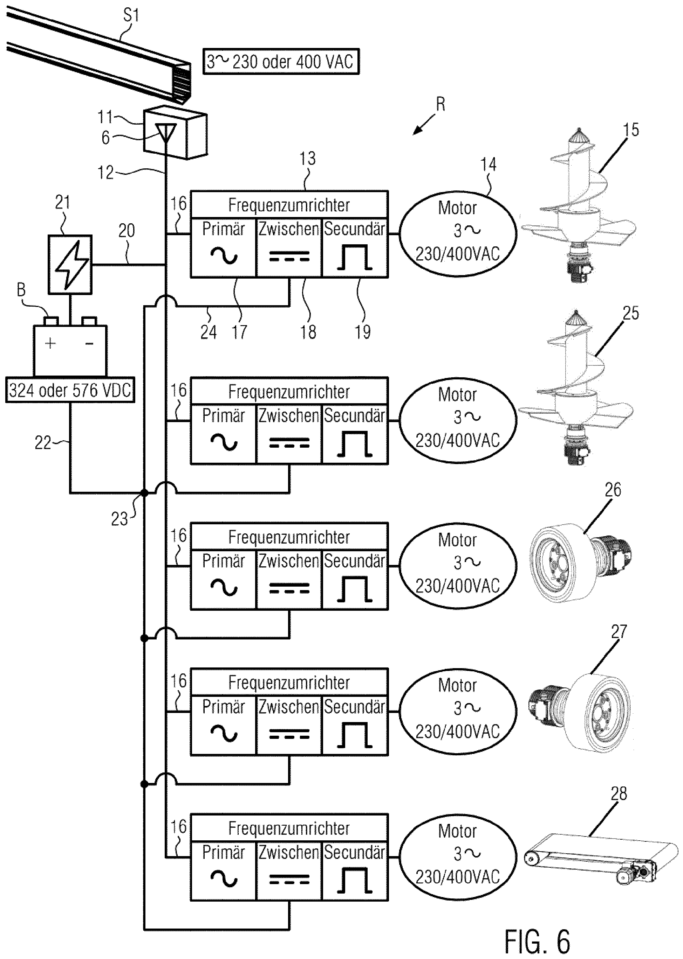

Der Längsschnitt des Fütter-Roboters R in Fig. 4 zeigt den oval-konischen Behälter 30, der auf einem Fahrwerk ruht, das beispielsweise Fahr- und/oder Lenkräder 26, 27 aufweist, mit denen die Bewegungsenergie auf den Boden übertragen wird, wenn der Roboter R fährt. Im Behälter 30 sind optional mindestens zwei Mischorgane 15, 25 als vertikal stehende Mischschnecken verbaut, wobei jedes Mischorgan 15, 25 über einen eigenen Elektroantrieb 14 angetrieben wird, beispielsweise über ein Getriebe 31. Weitere Elektroantriebe 14 sind für die Fahr- und/oder Lenkräder 26, 27 vorgesehen. Die Elektroantriebe 14 enthalten zweckmäßig Synchron- oder Asynchronmotoren in Stern- oder Dreieckschaltung. Die Getriebe können Schaltgetriebe oder Planetengetriebe sein. In einem Nebenabteil des Behälters 30 sind beispielsweise mehrere Batterien B angeordnet. Der Roboter R verfügt über nicht näher hervorgehobene Wägeeinrichtungen und Steuereinrichtungen, beispielsweise die in Fig. 6 gezeigten Frequenzumrichter 13 zur Drehzahlregelung der Elektroantriebe 14. Ferner kann eine Steuerung vorgesehen sein, um die Mischorgane 15, 25 gemeinsam oder einzeln anzutreiben.

Der Fütter-Roboter R verfügt ferner über eine Ausdosiervorrichtung 28, beispielsweise wenigstens einem seitlich am Behälter 30 angeordneten Schieber zum Verschließen und Freilegen einer Ausdosieröffnung und ein oder mehrere Querförderbänder. Um beim Ausdosieren in der jeweiligen Futtergasse 7 energieeffizient zu arbeiten, kann bei vollem Behälter 30 (abgetastet über Gewichts- oder Füllsensoren) zunächst nur ein Mischorgan angetrieben werden, um auszudosieren, während das andere Mischorgan steht und erst eingeschaltet wird, wenn sich der Füllstand verringert hat, um den anderen Mischorgan zuzuliefern, während dieses weiterhin ausdosiert oder vorübergehend steht. Ist genügend Futter umgeschichtet, kann das gerade nicht ausdosierende Mischorgan wieder stillgesetzt werden. Es sind auf diese Weise verschiedene Verfahren zum Antreiben der Mischorgane und gegebenenfalls der Ausdosiervorrichtung möglich, und zwar im Hinblick darauf, möglichst viel elektrische Energie einzusparen, ohne den Ausdosierbetrieb einzuschränken.

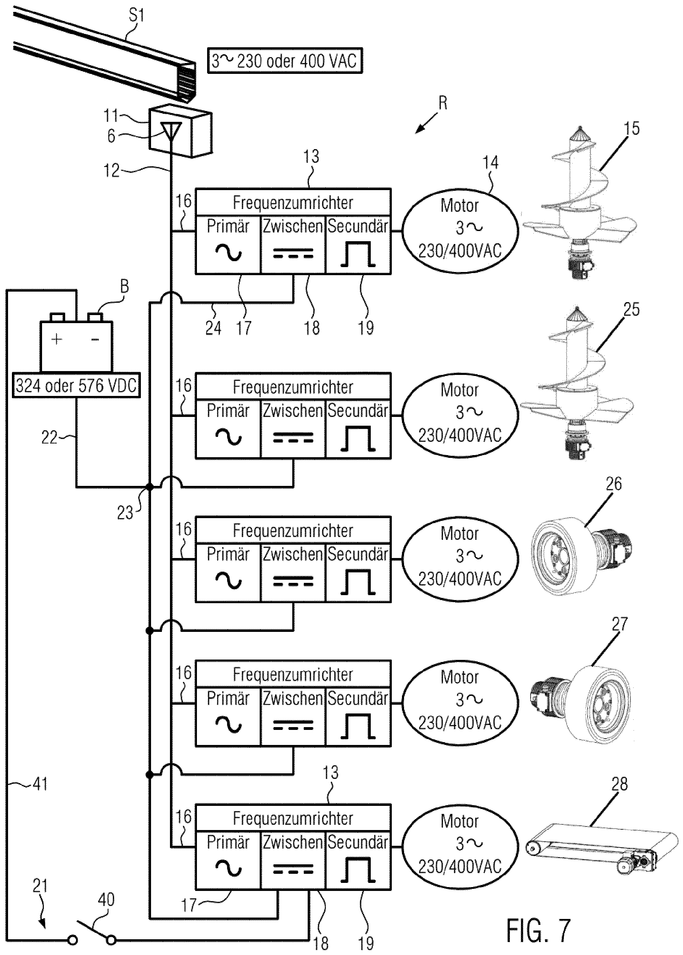

Die in Fig. 5 gezeigte Ausführungsform des Fütter-Roboters R unterscheidet sich von der der Fig. 4 vor allem dadurch, dass für die zwei Mischorgane 15, 25 ein gemeinsamer Elektroantrieb 14 vorgesehen ist, der einen sich über beide Mischorgane 15, 25 erstreckenden Antriebsstrang 33 treibt, der sich über die Getriebe 31 erstreckt und dazwischen eine Zwischenwelle 34 mit wenigstens einer Schaltkupplung 35 enthält. Dieses Konzept ermöglicht es ebenfalls, beide Mischorgane 15, 25 gleichzeitig oder wechselweise einzeln zu betreiben. Gegebenenfalls sind die Getriebe 31 schaltbare Planetengetriebe, um unterschiedliche Drehzahlen und/oder Drehmomente für die Mischorgane 15, 25 abzugeben. Die Fig. 6 und 7 verdeutlichen die elektrische Verschaltung des Fütter-Roboters R bei einer Ausführungsform mit eigenen Elektroantrieben 14 für die beiden Mischorgane 15, 25, eigenen Elektroantrieben für die Räder 26, 27, und einen Elektroantrieb für ein Querförderband 28 als Ausdosiervorrichtung.

Der Fütter-Roboter R in Fig. 6 hat beispielsweise über die Andockvorrichtung 6 an die Stromschienenstrecke S1 in der Futterküche angedockt und wird über eine Hauptleitung 12 mit Drehstrom von beispielsweise 400 VAC (400 V Wechselstrom) gespeist. Für jeden drehzahlregelbaren Elektroantrieb 14 ist ein Frequenzumrichter 13 vorgesehen, der über eine Zweigleitung 16 an die Hauptleitung 12 angeschlossen ist, und einen Wechselspannungs-Primärkreis 17, einen Gleichspannungs-Zwischenkreis 18 und einen Wechselspannungs-Sekundärkreis 19 aufweist. Wenigstens eine Zweigleitung 20 von der Hauptleitung 12 führt zu einer hier bordeigenen Batterie-Ladevorrichtung 21, von der über die Batterie B eine Leitung 22 zu einem Knoten 23 führt. Vom Knoten 23 führen Leitungen 24 zu jedem Zwischenkreis 18 eines Frequenzumrichters 13.

Die wenigstens eine Batterie B ist eine Hochvolt-Batterie, die systembedingt theoretisch in der Lage ist, eine um einen Faktor >1, nämlich 1, 41 höheren Gleichstrom, mit hier etwa 564 V, aus dem 400 VAC-Drehstrom abzugeben.

Ferner ist in Fig. 6 und 7 mit 11 eine Sicherheitsschaltung angedeutet, die bei der jeweiligen Andockvorrichtung 6 beispielsweise dafür sorgt, dass zunächst nur eine geringe Spannung von beispielsweise bis zu 48 V übertragen wird, solange stromführende Teile von außen noch zugänglich sind, und erst dann auf den vollen Drehstrom umschaltet, wenn die in Fig. 6 nicht gezeigten Stromabnehmer 29 des Roboters R so angedockt haben, dass von außen kein Zugriff mehr auf stromführende Komponenten möglich ist (Unfallschutz).

Solange in Fig. 6 und 7 der Fütter-Roboter R an die Stromschienenstrecke S1 (oder die anderen Stromschienenstrecken S2 bis S5) angedockt ist und entweder steht oder fährt, können die Elektroantriebe 14 aus dem Netz versorgt werden, und wird gleichzeitig die Batterie B beigeladen oder vollgeladen gehalten. Hat der Fütter-Roboter R hingegen von der Stromschienenstrecke S1 abgedockt, werden die Elektroantriebe 14 über die Batterie B betrieben, wobei die Batterie B hohe Gleichspannung in den jeweiligen Zwischenkreis 18 einspeist, aus der in dem Sekundärkreis 19 die für den Elektroantrieb 14 gerade gebrauchte Wechselspannung erzeugt wird.

Der Roboter R ist selbstfahrend, wird automatisch beladen, mischt beispielsweise während des Aufenthalts in der Futterküche 1, oder auch noch beim Anfahren der jeweiligen Futtergasse, und dosiert das Futter für das Vieh nach einer vorgegebenen Programmierung. Falls nur in der Futterküche 1 die Stromschienenstrecke S1 verbaut ist, erfolgt der Fahrbetrieb und erfolgt das Ausdosieren über die Batterie B, sind hingegen, wie beispielsweise in Fig. 1 angedeutet, mehrere Stromschienenstrecken S1 bis S5, jeweils mit mindestens einer Andockvorrichtung 6, in der Anlage verbaut, ausgenommen die Fahrstreckenabschnitte im freien Gelände, dann können der Fahrbetrieb und/oder der Ausdosierbetrieb wahlweise über die Batterie oder aus dem Netz oder in Kombination dieser beiden Stromquellen erfolgen.

Die in Fig. 7 gezeigte Schaltung des Fütter-Roboters R unterscheidet sich von Fig. 6 durch eine Variante der Batterie-Ladevorrichtung 21, und zwar ist anstelle der bordeigenen separaten Ladevorrichtung 21 von Fig. 6 die Hochvolt-Batterie B zum Laden über eine eigene Leitung 41 und einen Schalter/Relais 40 an einen Gleichstrom-Zwischenkreis 18 eines Frequenzumrichters 13, hier der Ausdosiervorrichtung 28, angeschlossen, um hohe Gleichspannung zum Laden abzugreifen. Hier kann eine elektronische Boost-Schaltung eingesetzt werden, um den Ladevorgang zu optimieren.

Anhand der Fig. 4-7 wurde der Fütter-Roboter R erläutert, der den Misch- und/oder Schneidebetrieb mit Drehstrom ausführt. Alternativ kann der mindestens eine Roboter R ein Verteil-Roboter sein, der jeweils mit Futter oder bereits gemischtem Futter in der Futterküche 1 beladen wird. Gegenüber den Fig. 4-7 entfallen beim Verteil-Roboter R die Mischorgane 15, 25 und deren Antriebe. Der Verteilroboter R kann optional eine Ausdosiervorrichtung enthalten, die nicht drehzahlregelbare Elektroantriebe umfasst. Jedoch ist zum selbständigen Fahren wenigstens ein drehzahlregelbarer Elektroantrieb 14 mit einem Frequenzumrichter 13 vorgesehen, an dessen Gleichspannungs-Zwischenkreis 18 die Hochvoltbatterie B anschließbar ist.

In Fig. 6 ist gestrichelt eine Detailvariante gezeigt. Anstelle einer bordeigenen Ladevorrichtung 21 des Roboters R ist hier wenigstens eine stationäre Ladevorrichtung 21 vorgesehen, die bei angedocktem Roboter R die Hochvolt-Batterie B über eine von der Hauptleitung 12 getrennte Ladeleitung mit Gleichstrom speist.

Weitere Aspekte der Erfindung sind:
Eine zur Viehfütterung geeignete Anlage A mit wenigstens einer mehrere Lager 8, 9 für Futter und/oder Zusätze enthaltenden Futterküche 1, wenigstens einem Futterausdosierbereiche 7 enthaltenden Viehstall 2, 3, der über Roboter-Fahrstrecken 4 zumindest mit der Futterküche 1 verbunden ist, und wenigstens einen elektrisch betreibbaren, selbstfahrenden Roboter R mit wenigstens einem über einen Frequenzumrichter 13 drehzahlregelbaren Elektroantrieb 14, wenigstens einer über eine Batterie-Ladeeinrichtung 21 ladbaren Batterie B, der zumindest in der Futterküche 1 über wenigstens einen Stromabnehmer 29 an eine Stromversorgung anschließbar ist, wobei zumindest in der Futterküche 1 eine an den Lagern 8, 9 vorbeigeführte Stromschienenstrecke S1 und wenigstens eine eine Roboter-Einlaufstelle in die und eine Roboter-Auslaufstelle aus der Stromschienenstrecke S1 definierende Andockvorrichtung 6 vorgesehen ist, wobei die Stromschienenstrecke S1 sich im Wesentlichen über einen Gesamtbereich in der Futterküche 1 erstreckt, innerhalb dessen der Roboter R zumindest beladen wird. In der Futterküche 1 sind mehrere Andockvorrichtungen 6 vorgesehen. Zusätzlich kann in zumindest einem Stall 3, 2 wenigstens eine Stromschienenstrecke S3, S4, S5 und daran jeweils mindestens eine Andockvorrichtung 6 vorgesehen sein. Abschnitte 4d, 4e der Fahrstrecke 4 zwischen der Futterküche 1 und dem jeweiligen Stall 2, 3 können frei von Stromschienenstrecken und Andockvorrichtungen sein. Die Stromübertragung zwischen der Stromschienenstrecke und dem Roboter R kann galvanisch oder berührungslos erfolgen. Jede Andockvorrichtung 6 weist einen Einlauftrichter 11 oder ein Zwangslenksystem für den Roboter R, vorzugsweise dessen, vorzugsweise zweifach vorgesehene, Stromabnehmer 29 auf. Die Andockvorrichtung 6 kann eine Sicherheitsschaltung 11 aufweisen, mit der bis zum im Wesentlichen vollen Andocken des Roboters R nur Niederspannung bis z. B. 48 V bereitgestellt und erst nach vollem Andocken auf Drehstrom umschaltbar ist. Es kann entweder jedes Mischorgan 15, 25 einen eigenen drehzahlregelbaren Elektroantrieb 14 aufweisen, oder es weisen beide Mischorgane 15, 25 einen gemeinsamen Elektroantrieb 14 für einen Antriebstrang 34 mit einer Schaltkupplung 35 zwischen den Mischorganen 15, 25 auf. Für die Mischorgane 15, 25 kann eine Steuerung vorgesehen sein, mit der abhängig von von Sensoren bereitgestellten Betriebsparametern, wie Strombedarf, Füllgewicht, Füllhöhe, Ausdosiermenge pro Zeiteinheit oder dergleichen, wahlweise nur jeweils eines der Mischorgane 15, 25 oder alle antreibbar und drehzahlregelbar ist bzw. sind. Die Fahrstrecken 4 können durch ein Gleitschienennetz, vorzugsweise mit Weichen 5, auch mit Weichen zwischen verknüpften Stromschienenstrecken S2-S4 vorbestimmt sein. Die Stromschienenstrecke S1-S5 ist etwa bodenparallel und geringfügig oberhalb des Behälters 30 des Roboters R stationär verbaut.

## Patentansprüche

1. Roboter (R) für Anlagen (A) zur Viehfütterung mit einem auf einem Fahrwerk mit Antriebs- und/oder -Lenkrädern (26, 27) angeordneten, wenigstens ein Mischorgan (15, 25) enthaltenden Behälter (30), einer Ausdosiervorrichtung (28), einem Elektroantrieb (14) mit wenigstens einem Frequenzumrichter (13), einer Batterie (B) und wenigstens einem Stromabnehmer (29) zur Verbindung mit einer Stromschienenstrecke (S1 bis S5),wobei der Roboter (R) über Frequenzumrichter (13) drehzahlregelbare Elektroantriebe (14) für das wenigstens eine Mischorgan (15, 25), für Antriebs- und/oder Lenkräder (26, 27) und für die Ausdosiervorrichtung (28) aufweist, **dadurch gekennzeichnet, dass** die Batterie (B) eine Hochvolt-Gleichstrombatterie und abgabeseitig an einen Gleichstrom-Zwischenkreis (18) des den Gleichstrom-Zwischenkreis (18), einen Wechselstrom-Primärkreis (17) und einen Wechselstrom-Sekundärkreis (19) aufweisenden Frequenzumrichters (13) angeschlossen ist.

2. Roboter nach Anspruch 1, **dadurch gekennzeichnet, dass** die Hochvolt-Batterie (B) eine Nickel/Metallhydride-Batterie oder eine Lithium-Batterie oder eine Nickel-Cadmium-Batterie ist.

3. Roboter nach Anspruch 1, **dadurch gekennzeichnet, dass** der Roboter mindestens eine bordeigene Batterie-Ladevorrichtung (21) aufweist.

4. Roboter nach Anspruch 1, **dadurch gekennzeichnet, dass** der Roboter (R) ein zumindest in einer Futterküche (9) im Behälter (30) mit Futter beladbarer, selbstmischender Fütter-Roboter ist.

5. Roboter nach Anspruch 4, **dadurch gekennzeichnet, dass** der Fütter-Roboter mindestens zwei Mischorgane (15, 25) im Behälter (30) aufweist.

6. Roboter nach Anspruch 1, **dadurch gekennzeichnet, dass** der Roboter (R) ein zumindest in einer Futterküche (1) mit, vorzugsweise sogar bereits vorgemischtem, Futter im Behälter (30) beladbarer Verteil-Roboter ist.

7. Roboter nach Anspruch 1, **dadurch gekennzeichnet, dass** der Frequenzumrichter (13) des Elektroantriebes (14) und ggf. die Batterie-Ladevorrichtung (21) mit Drehstrom mit mindestens etwa 230 VAC, vorzugsweise etwa 400 VAC, speisbar sind, wobei der jeweilige Elektroantrieb (14), vorzugsweise, einen in Stern- oder Dreieck-Schaltung betreibbaren Synchron- und/oder Asynchronmotor aufweist.

8. Roboter nach Anspruch 7, **dadurch gekennzeichnet, dass** die Abgabe-Gleichspannung der Hochvolt-Batterie (B) um einen Faktor >1, vorzugsweise um etwa 1,41, höher ist als die den Wechselstrom-Primärkreis (17) des Frequenzumrichters (13) beaufschlagende Wechselspannung.

9. Roboter nach Anspruch 3, **dadurch gekennzeichnet, dass** die Batterie-Ladevorrichtung (21) eine einen Schalter oder ein Relais (40) enthaltende Leitung (41) zwischen der Hochvolt-Batterie (B) und wenigstens einem Gleichstrom-Zwischenkreis (18) eines FrequenzUmrichters (13) umfasst.

## Claims

1. A robot (R) for a system (A) configured for feeding livestock, comprising a container (30) arranged on a chassis with drive and/or steering wheels (26, 27) including at least one mixing member (15, 25), a metering device (28), an electric drive (14) comprising at least one frequency converter, a battery (B), and at least one current collector (29) for connection to a power rail line (S1 to S5), wherein the robot (R) comprises electric drives (14), which are speed-controllable by means of frequency converters (13), for the at least one mixing member (15, 25), for the drive and/or steering wheels (26, 27), and for the metering device (28), **characterized in that** the battery (B) is a high-voltage DC battery and is connected on the output side to a DC intermediate circuit (18) of the frequency converter (13), the frequency converter including the DC intermediate circuit (18), an AC primary circuit (17), and an AC secondary circuit (19).

2. The robot (R) according to claim 1, **characterized in that** the high-voltage battery (B) is a nickel/metal hydride battery or a lithium battery or a nickel-cadmium battery.

3. The robot (R) according to claim 1, **characterized in that** robot comprises at least one on-board battery charging device (21).

4. The robot (R) according to claim 1, **characterized in that** the robot (R) is a self-mixing feeding robot which can be loaded with feed in the container (30) at least in a feed preparation room (1).

5. The robot (R) according to claim 4, **characterized in that** the feeding robot comprises at least two mixing members (15, 25) in the container (30).

6. The robot (R) according to claim 1, **characterized in that** the robot (R) is a dispensing robot which can be loaded with, preferably premixed, feed in the container (30) at least in a feed preparation room (1).

7. The robot (R) according to claim 1, **characterized in that** the frequency converter (13) of the electric drive (14) and, if appropriate, the battery charging device (21), can be supplied with three-phase current with at least about 230 VAC, preferably about 400 VAC, wherein the respective electric drive (14) preferably includes a synchronous and/or asynchronous motor which can be operated in star or delta connection.

8. The robot (R) according to claim 7, **characterized in that** the output DC voltage of the high-voltage battery (B) is higher by a factor >1, preferably by about 1.41, than the AC voltage acting on the AC primary circuit (17) of the frequency inverter (13).

9. The robot (R) according to claim 3, **characterized in that** the battery charging device (21) comprises a line (41) including a switch or a relay (40) between the high-voltage battery (B) and at least one DC intermediate circuit (18) of a frequency converter (13).

## Revendications

1. Robot (R) pour des installations (A) d'alimentation de bétail ayant un récipient (30) disposé sur un châssis avec des roues motrices et/ou directrices (26, 27) et contenant au moins un organe de mélange (15, 25), un dispositif de dosage (28), un entraînement électrique (14) ayant au moins un convertisseur de fréquence (13), une batterie (B) et au moins un collecteur de courant (29) pour la liaison avec un parcours de rail conducteur (S1 à S5), le robot (R) présentant, par l'intermédiaire de convertisseurs de fréquence (13), des entraînements électriques (14) à vitesse réglable pour l'au moins un organe de mélange (15, 25), pour des roues motrices et/ou directrices (26, 27) et pour le dispositif de dosage (28), **caractérisé, en ce que** la batterie (B) est une batterie à courant continu à haute tension et est raccordée, côté sortie, à un circuit intermédiaire à courant continu (18) du convertisseur de fréquence (13) ayant le circuit intermédiaire à courant continu (18), un circuit primaire à courant alternatif (17) et un circuit secondaire à courant alternatif (19).

2. Robot selon la revendication 1, **caractérisé en ce que** la batterie haute tension (B) est une batterie au nickel/hydrure métallique ou une batterie au lithium ou une batterie au nickel-cadmium.

3. Robot selon la revendication 1, **caractérisé en ce que** le robot comprend au moins un dispositif de charge de batterie embarqué (21).

4. Robot selon la revendication 1, **caractérisé en ce que** le robot (R) est un robot d'alimentation automélangeur pouvant être chargé en aliment au moins dans une cuisine d'alimentation (9) dans le récipient (30).

5. Robot selon la revendication 4, **caractérisé en ce que** le robot d'alimentation comprend au moins deux organes de mélange (15, 25) dans le récipient (30).

6. Robot selon la revendication 1, **caractérisé en ce que** le robot (R) est un robot de distribution pouvant être chargé au moins dans une cuisine d'alimentation (1) avec de l'aliment, de préférence même déjà prémélangé, dans le récipient (30).

7. Robot selon la revendication 1, **caractérisé en ce que** le convertisseur de fréquence (13) de l'entraînement électrique (14) et, le cas échéant, le dispositif de charge de batterie (21) peuvent être alimentés par un courant triphasé d'au moins environ 230 VAC, de préférence d'environ 400 VAC, l'entraînement électrique respectif (14) présentant, de préférence, un moteur synchrone et/ou asynchrone pouvant fonctionner dans un montage en étoile ou en triangle.

8. Robot selon la revendication 7, **caractérisé en ce que** la tension continue de sortie de la batterie haute tension (B) est supérieure d'un facteur >1, de préférence d'environ 1,41, à la tension alternative alimentant le circuit primaire alternatif (17) du convertisseur de fréquence (13).

9. Robot selon la revendication 3, **caractérisé en ce que** le dispositif de charge de batterie (21) comprend une ligne (41) contenant un commutateur ou un relais (40) entre la batterie haute tension (B) et au moins un circuit intermédiaire à courant continu (18) d'un convertisseur de fréquence (13).
